# EUROPÄISCHE PATENTSCHRIFT

(11) **EP 2 952 778 B1**
(45) Veröffentlichungstag und Bekanntmachung des Hinweises auf die Patenterteilung: **14.06.2017**
(21) Anmeldenummer: 15163082.9
(22) Anmeldetag: 10.04.2015
(51) Int. Cl.: F16G 1/08, F16G 1/28, F16G 5/06, F16G 5/20

(54) **ELASTISCHER ARTIKEL, INSBESONDERE KEILRIPPENRIEMEN**
ELASTIC ITEM, IN PARTICULAR V-RIBBED BELT
ARTICLE ÉLASTIQUE, EN PARTICULIER COURROIE TRAPÉZOÏDALE

(30) Priorität: 05.06.2014 DE 102014210707
(43) Veröffentlichungstag der Anmeldung: 09.12.2015
(73) Patentinhaber: ContiTech Antriebssysteme GmbH, 30165 Hannover (DE)
(72) Erfinder: Kanzow, Henning, 30419 Hannover (DE); Sandmann, Rene, 31084 Freden (DE); Greiner, Christian, 30167 Hannover (DE); Schleicher, Marko, 30419 Hannover (DE)
(74) Vertreter: Preusser, Andrea

(56) Entgegenhaltungen:
- EP-A1- 1 108 750
- EP-A1- 2 693 078
- WO-A1-2007/085521
- US-A1- 2013 059 690

## Beschreibung

Die Erfindung betrifft einen Artikel, welcher dynamischen Belastungen ausgesetzt wird, mit einem elastischen Grundkörper mit einem verschleißanfälligen Oberflächenbereich, welcher an einem Vulkanisat des Grundkörpers ausgebildet ist, welches auf Basis einer EPM- und/oder EPDM-Kautschuk enthaltenden Kautschukmischung hergestellt ist.

Ein derartiger Artikel, wie beispielsweise ein Antriebsriemen oder ein Fördergurt, ist während seines Einsatzes einer dynamischen Belastung und einem damit verbundenen Verschleiß ausgesetzt und verursacht im Betrieb Geräusche. Es ist bekannt und üblich, Antriebsriemen im Bereich ihrer Kraftübertragungszone mit einer Beschichtung zu versehen, um ihre Abriebsbeständigkeit zu erhöhen und um einen geräuscharmen Betrieb zu gewährleisten. Aus EP1108750A1 ist zum Beispiel ein derartiger Antriebsriemen nach dem Oberbegriff des Anspruchs 1 bekannt. Aus der DE 44 00 434 A1 sind ein Antriebsriemen und ein Verfahren zu dessen Beschichtung bekannt, wobei zumindest die verschleißanfälligen, bewegungsübertragenden Oberflächen des Antriebsriemens eine Beschichtung aufweisen, die aus einer vernetzten Polymermatrix besteht, welche einen fluorhaltigen Kunststoff, beispielsweise PTFE (Polytetrafluorethylen), enthält. Die Beschichtung wird beispielsweise durch einen Sprühvorgang aufgebracht. Dieser Sprühprozess reagiert empfindlich auf Änderungen der Umgebungsbedingungen, wie Luftfeuchtigkeit und Lufttemperatur. Die für die Beschichtung notwendige Trocknungszeit verhindert außerdem einen effizienten Herstellungsprozess. Ein solcher Riemen neigt bei nassen Betriebsbedingungen zu starker Geräuschentwicklung.

Die DE 10 2006 007 509 A1 offenbart einen Keilrippenriemen, welcher über ein mit einer Gleitbeschichtung ausgestattetes Gewirke aus Polyamidfilamenten und elastischem Polyurethan verfügt. Solche Gewirke sind nur aufwändig und kostenintensiv herzustellen. Aus der EP 1 396 658 B1 ist ein mit einer Elastomerschicht beschichteter Keilrippenriemen bekannt. Die der Elastomerschicht zugrundeliegende Kautschukmischung enthält ein Fluorpolymer sowie Fasern. Bedingt durch die Fasern sind die Mischungen teuer und aufwändig herzustellen.

Aus der US 6 793 599 A ist ein Antriebsriemen, in dessen Kraftübertragungszone ein Vliesmaterial eingearbeitet ist, bekannt. Klassische Vliesmaterialen, welche bei den üblichen Vulkanisationsbedingungen nicht schmelzen, weisen schlechte Abriebseigenschaften auf. Folglich sind sie nicht als Verschleißschutz auf Reibflächen geeignet. Des Weiteren sind solche Vliesmaterialien nicht ausreichend elastisch, wodurch das Ausformen von Keilrippenriemen im Formverfahren erschwert ist.

Die US 2008207371 A1 offenbart eine Keilriemenbeschichtung, welche mindestens 30% LDPE (Low-Density-Polyethylene) eines Molekulargewichts von 50.000 g/mol bis 200.000 g/mol enthält. Bei Schiefstellung neigt der Keilriemen zu ausgeprägten Betriebsgeräuschen. Unter dem Einfluss von tiefen Temperaturen wird die Beschichtung spröde, wodurch Risse in der Beschichtung auftreten können und die Gleiteigenschaften des Keilriemens nicht mehr durch diese verbessert werden.

Aus der EP 2 166 251 A1 ist ein Riemen, welcher aus einer Ethylen-alpha-Olefin-Kautschuk enthaltenden Kautschukmischung hergestellt ist, wobei als Kautschuk beispielsweise EPDM enthalten ist, bekannt. Dieser Riemen weist eine Sperrschicht aus HDPE oder LDPE auf, welche eine Anbindung einer äußeren Beschichtung aus einem textilen Material an den Riemen ermöglicht.

Aus der WO 2012/146419 A1 ist ein elastischer Artikel, insbesondere ein Keilrippenriemen, dessen verschleißanfällige Artikeloberfläche mit einer Beschichtung versehen ist, bekannt. Bei der Beschichtung handelt es sich um ein Kunststoffvlies aus Polyethylen oder Polypropylen, welches bei der Vulkanisation aufschmilzt und dadurch einen festen Haftverbund zum Grundkörper des Artikels herstellt. Bei nassen Betriebsbedingungen zeigt ein solcher Keilrippenriemen wenig Betriebsgeräusche, bei Trockenheit und in Schiefstellung des Keilrippenriemens kommt es jedoch zu einer ausgeprägten Geräuschentwicklung während des Einsatzes.

Aus der DE 102 008 025 030 A1 ist ein Riemen bekannt, dessen elastischer Grundkörper aus einer EPDM-Kautschukmischung aufgebaut ist, welche zwei verschiedene C₆- bis C₂₄-Fettsäuren und/oder deren Derivate enthält. Ein aus dieser Kautschukmischung hergestellter Riemen soll im Betrieb geräuscharm sein.

Im Rahmen einer Weiterentwicklung des oben beschriebenen Standes der Technik liegt der Erfindung die Aufgabe zugrunde, einen aus wenigstens einer Kautschukmischung hergestellten elastomeren Artikel, insbesondere einen Keilrippenriemen, bereitzustellen, welcher eine hohe Verschleißresistenz aufweist und dessen Betriebsgeräusche, vor allem im Nassbetrieb und nach Materialverschleiß, optimiert sind, wobei keine weiteren physikalischen Eigenschaften, insbesondere der Reibwert, negativ beeinflusst werden. Ist der Artikel ein Keilrippenriemen soll ferner bei seiner Herstellung durch ein Formverfahren auf verfahrenstechnisch aufwändige Beschichtungsverfahren und bei seiner Herstellung durch ein Schleifverfahren auf teure Textilfaser im Unterbau verzichtet werden.

Gelöst wird die gestellte Aufgabe erfindungsgemäß dadurch, dass wenigstens eine Kautschukmischung zusätzlich 1 phr bis 30 phr Polyethylen enthält.

Durch den Zusatz von Polyethylen in wenigstens einer Kautschukmischung in wenigstens einem verschleißanfälligen Oberflächenbereich des elastomeren Artikels wird ein verschleißresistenter elastomerer Artikel, welcher sich überraschender Weise, insbesondere bei feuchten Betriebsbedingungen, durch einen geräuscharmen Betrieb auszeichnet, erhalten. Darüber hinaus wird eine hohe Verschleißresistenz gewährleistet, wobei auch ein geräuscharmer Betrieb nach einem gewissen Verschleiß sichergestellt ist.

Bei einer bevorzugten Ausführungsform der Erfindung enthält die Kautschukmischung 5 phr bis 20 phr, insbesondere 7 phr bis 15 phr, Polyethylen, sodass die aus der Kautschukmischung hergestellten Vulkanisate höhere Shore A - Härten aufweisen, sodass Gummiartikel, die aus einer erfindungsmäßigen Kautschukmischung hergestellt sind, besonders gute Abriebs- und Verschleißeigenschaften zeigen.

Der Polyethylenanteil in der Mischung stammt erfindungsgemäß zu mehr als 40 Gew.-% entweder von UHMPE (Ultra-High-Molecular-Weight-Polyethylene) oder von HDPE (High-Density-Polyethylene). Besonders durch diese Polyethylen-Typen kann das Nassgeräuschverhalten deutlich verbessert werden, wobei HDPE kostengünstiger ist. Der Einsatz von LDPE (Low-Density-Polyethylene) in der Mischung würde hingegen überraschender Weise zu einer sehr schlechten Abriebsbeständigkeit der Vulkanisate führen.

Die Kautschukmischung enthält ferner 2 phr bis 15 phr zumindest einer C₆ bis C₂₄ - Fettsäure und/oder deren Derivate. Diese Additive fungieren u.a. als Gleitmittel.

Gemäß einer vorteilhaften Ausführungsform der Erfindung enthält die Kautschukmischung als Gleitmittel Erucasäureamid. Dieses Säureamid ist im Stande, während des Betriebes des Artikels an dessen Oberfläche zu wandern ("auszuschwitzen") und kann derart die Betriebsgeräusche bei trockenen Betriebsbedingungen und Schiefstellung des dynamisch beanspruchten Artikels effektiv unterdrücken, wobei die Reibung, im Gegensatz zu anderen Gleitadditiven, gleichermaßen hoch bleibt.

Artikel, welche auf Basis einer Kautschukmischung, die Polyethylen enthält, hergestellt werden können, sind beispielsweise ein Transportband, ein Scheibenwischer oder ein Antriebsriemen, wobei durch den Zusatz von Polyethylen die Verschleißresistenz der Artikel erhöht und die gegebenenfalls mit dem Betrieb der Artikel verbundene Geräuschentwicklung, insbesondere bei Nässe, minimiert wird.

Besonders vorteilhaft ist die Erfindung bei Keilrippenriemen mit einem elastomeren Grundkörper bestehend aus einer Decklage und einem Unterbau, wobei zwischen der Decklage und dem Unterbau Zugträger eingebettet sind, wobei der Unterbau den verschleißanfälligen Oberflächenbereich aufweist und aus der Kautschukmischung gemäß der Erfindung hergestellt ist.

Die Kautschukmischungen des Unterbaus und der Decklage können bezüglich ihrer Mischungskomponenten und / oder bezüglich der Art und / oder der Menge an Polyethylen gleich oder verschieden voneinander sein. So können beispielsweise der Unterbau und die Decklage jeweils gleiche oder verschiedene Mengen an Polyethylen enthalten. Oder die Decklage ist frei von Polyethylen, d.h. die Menge an Polyethylen in der Decklage beträgt 0 phr, und nur der Unterbau enthält Polyethylen. Ebenso kann der Unterbau frei von Polyethylen sein, d.h. die Menge an Polyethylen im Unterbau beträgt 0 phr, und nur die Decklage enthält Polyethylen

Außerdem ist die Erfindung besonders vorteilhaft bei Keilrippenriemen mit einem elastomeren Grundkörper bestehend aus einer Decklage, einem Unterbau und zumindest einer zwischen der Decklage und dem Unterbau befindlichen Gummischicht, wobei in der Gummischicht Zugträger verlaufen, und wobei der Unterbau den verschleißanfälligen Oberflächenbereich aufweist und aus der Kautschukmischung gemäß der Erfindung hergestellt ist.

Bei Keilrippenriemen ist daher zumindest die Mischung des Unterbaus gemäß der Erfindung ausgeführt. Bei durch ein Formverfahren hergestellten Keilrippenriemen kann die verfahrenstechnisch aufwändige und damit teure Beschichtung entfallen. Bei durch ein Schleifverfahren hergestellten Keilrippenriemen müssen keine teuren Textilfasern zur Verbesserung des Geräuschverhaltens im Unterbau eingesetzt werden, wodurch die verfahrenstechnisch aufwändige Herstellung von faserhaltigen Kautschukmischungen entfällt und Kosten eingespart werden können. Des Weiteren neigen Textilfasern in geschliffenen Keilrippenriemen durch ihren Verschleiß dazu, abzubrechen, wodurch der geräuschmindernde Effekt nicht dauerhaft ist.

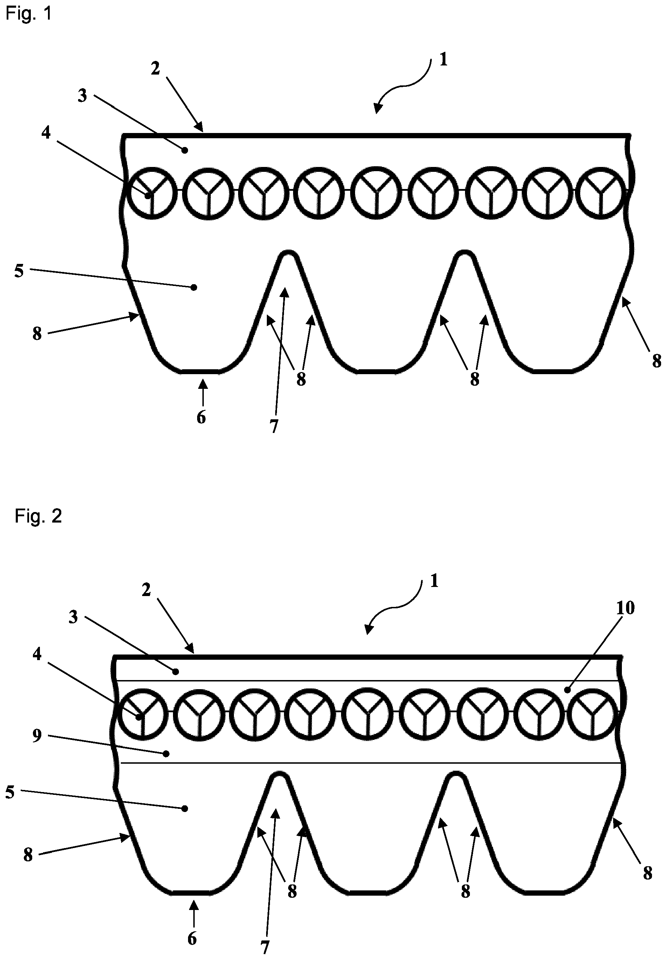

Weitere Merkmale, Vorteile und Einzelheiten der Erfindung werden nun anhand zweier Ausführungsbeispiele unter Bezugnahme auf die beiden Zeichnungsfiguren, Fig. 1 und Fig. 2, näher erläutert.

In der nachfolgenden Beschreibung werden alle Mengen in der in der Kautschuktechnologie üblichen Einheit phr (parts per hundred rubber) angegeben. Die Mengenangaben beziehen sich dabei jeweils auf die Massenteile des Grundpolymers oder bei Polymerblends, der Grundpolymere.

Fig. 1 zeigt einen Teil des Querschnittes durch einen gemäß einer Ausführungsform der Erfindung ausgeführten Antriebsriemen 1, der als Keilrippenriemen ausgebildet ist. Der Antriebsriemen 1 weist einen Riemenrücken 2, eine Decklage 3, eine Festigkeitsträgerlage mit in Längsrichtung parallel zueinander verlaufenden Zugträgern 4 in Form von Einzelkorden sowie einen Unterbau 5 auf. Der Unterbau 5 besitzt eine Keilrippenstruktur, welche aus Rippen 6 und Rillen 7 gebildet wird, und umfasst Kraftübertragungszonen und Riemenflanken 8, die einen verschleißanfälligen Oberflächenbereich bilden.

Eine weitere erfindungsmäßige Ausführungsform eines Keilrippenriemens ist in Fig. 2 dargestellt. Bei dieser Ausführungsform weist der Keilrippenriemen zwischen der Decklage 3 und dem Unterbau 5 zwei Gummischichten 9 und 10 auf. Bei dieser Ausführungsform sind die Zugträgern 4 jeweils zum Teil, insbesondere zur Hälfte, in die Gummischichten 9 und 10 eingebettet. Bei einer nicht dargestellten Ausführungsform kann auch nur eine der genannten Gummischichten 9, 10 vorgesehen sein. Die Gummischichten 9 und 10 werden auch als "Einbettungsmischungen" bezeichnet.

Die Zugträger 4 bestehen insbesondere aus Polyethylentherephtalat (PET), Polyamid, Aramid, Polyethylen-2,6-naphthalat (PEN), Stahl, Glasfasern, Kohlefasern, Basaltfasern, oder Polyetheretherketon (PEEK).

Gemäß der Ausführungsform der Erfindung in Fig. 1 bilden die Decklage 3 und der Unterbau 5 einen Grundkörper auf Basis zumindest einer vulkanisierten Kautschukmischung, wobei die der Decklage 3 und dem Unterbau 5 zugrundeliegenden Kautschukmischungen identisch oder auch verschieden sein können. Bei der Ausführungsform der Erfindung gemäß Fig. 2 bilden hingegen die Decklage 3, der Unterbau 5 und die Gummischichten 9 und 10 den Grundkörper.

Der Unterbau 5 ist aus einer EPDM (Ethylen-Propylen-Dien-Mischpolymerisat)- oder einer EPM (Ethylen-Propylen-Mischpolymerisat) -Kautschukmischung oder einer Kautschukmischung, der ein Verschnitt dieser beiden Kautschuktypen zugrunde liegt, aufgebaut. Die Kautschukmischung des Unterbaus 5 enthält ferner 1 phr bis 30 phr Polyethylen, wobei Polyethylen als UHMPE (Ultra-High-Molecular-Weight-Polyethylene) oder HDPE (High-Density-Polyethylene) in Form von Pulver oder Granulat zugesetzt ist. Bevorzugter Weise weist die Kautschukmischung des Unterbaus 5 einen Polyethylengehalt von 5 phr bis 20 phr auf. Insbesondere bevorzugt ist für den Unterbau 5 eine Kautschukmischung, deren Gehalt an Polyethylen von 7 phr bis 15 phr reicht. Die Vulkanisate der polyethylenenthaltenden Kautschukmischungen weisen höhere Shore A - Härten als Vulkanisate vergleichbarer Mischungen ohne Polyethylen auf.

Die Kautschukmischungen der Decklage 3 und der Gummischichten 9 und 10 können mehrere verschiedene Kautschuktypen enthalten. Als Kautschuke kommen für diese Mischung beispielsweise EPM, EPDM, HNBR ((teil)hydrierter Nitrilkautschuk), CR (Chloropren-Kautschuk), FKM (Fluorkautschuk), NR (Naturkautschuk), SBR (StyrolButadien-Kautschuk) oder BR (Butadien-Kautschuk) zum Einsatz.

Der Kautschukmischung für den Unterbau 5 und gegebenenfalls auch der Kautschukmischung für die Decklage 3 wird zumindest ein Gleitadditiv zugesetzt. Als Gleitadditive werden bevorzugt 2 phr bis 15 phr zumindest einer C₆- bis C₂₄-Fettsäure und/oder deren Derivate zugesetzt. Als besonders gut geeignet hat sich die Verwendung von Erucasäureamid herausgestellt. Die Kautschukmischungen der Gummischichten 9 und 10 enthalten in der Regel keine Gleitadditive.

Die weiteren Mischungsbestandteile der Kautschukmischungen des Unterbaus 5, der Decklage 3 und der Gummischichten 9 und 10 umfassen wenigstens einen Vernetzer oder ein Vernetzungssystem, bestehend aus Vernetzungsmittel und Beschleuniger. Aufgrund der besseren Wärmestabilität der Elastomere sind peroxidische Vernetzungssysteme gegenüber jenen mit Schwefel zu bevorzugen. Weitere Mischungsbestandteile sind zumeist noch ein oder mehrere Füllstoff(e), wie beispielsweise Ruß und/oder Kieselsäure, und/oder wenigstens ein Verarbeitungshilfsmittel und/oder wenigstens ein Weichmacher und/oder wenigstens ein Alterungsschutzmittel sowie gegebenenfalls weitere Zuschlagstoffe, wie beispielsweise Farbpigmente. Diesbezüglich wird auf den allgemeinen und bekannten Stand der Technik in der Kautschukmischungstechnologie verwiesen.

### Bezugsziffernliste

- 1: Antriebsriemen
- 2: Riemenrücken
- 3: Decklage
- 4: Zugträger
- 5: Unterbau
- 6: Rippen
- 7: Rillen
- 8: Kraftübertragungszonen und Riemenflanken
- 9: erste Gummischicht
- 10: zweite Gummischicht

## Patentansprüche

1. Artikel, welcher dynamischen Belastungen ausgesetzt wird, mit einem elastischen Grundkörper (3, 5; 3, 5, 9, 10) mit einem verschleißanfälligen Oberflächenbereich, welcher an wenigstens einem Vulkanisat des Grundkörpers (3, 5; 3, 5, 9, 10) ausgebildet ist, welches auf Basis einer EPM- und/oder EPDM-Kautschuk enthaltenden Kautschukmischung hergestellt ist, wobei die Kautschukmischung 1 phr bis 30 phr Polyethylen enthält, **dadurch gekennzeichnet, dass** der Polyethylenanteil zu mehr als 40 Gew.-% von UHMPE (Ultra-High-Molecular-Weight-Polyethylene) stammt oder wobei der Polyethylenanteil zu mehr als 40 Gew.-% von HDPE (High-Density-Polyethylene) stammt.

2. Artikel nach Anspruch 1, **dadurch gekennzeichnet, dass** die Kautschukmischung 5 phr bis 20 phr Polyethylen enthält.

3. Artikel nach Anspruch 2, **dadurch gekennzeichnet, dass** die Kautschukmischung 7 phr bis 15 phr Polyethylen enthält.

4. Artikel nach einem der Ansprüche 1 bis 3, **dadurch gekennzeichnet, dass** die Kautschukmischung 2 phr bis 15 phr zumindest einer C₆- bis C₂₄-Fettsäure und/oder deren Derivate enthält.

5. Artikel nach Anspruch 4, **dadurch gekennzeichnet, dass** die Kautschukmischung Erucasäureamid enthält.

6. Artikel nach einem der Ansprüche 1 bis 5, **dadurch gekennzeichnet, dass** dieser ein Transportband, eine Fensterdichtung, ein Scheibenwischer oder ein Antriebsriemen ist.

7. Artikel nach einem der Ansprüche 1 bis 6, **dadurch gekennzeichnet, dass** er ein Keilrippenriemen mit einem elastomeren Grundkörper bestehend aus einer Decklage (3) und einem Unterbau (5) ist, wobei zwischen der Decklage (3) und dem Unterbau (5) Zugträger (4) eingebettet sind, wobei der Unterbau (5) den verschleißanfälligen Oberflächenbereich aufweist.

8. Artikel nach einem der Ansprüche 1 bis 6, **dadurch gekennzeichnet, dass** er ein Keilrippenriemen mit einem elastomeren Grundkörper bestehend aus einer Decklage (3), einem Unterbau (5) und zumindest einer zwischen der Decklage (3) und dem Unterbau (5) befindlichen Gummischicht (9, 10) ist, wobei in der Gummischicht (9, 10) Zugträger (4) verlaufen, wobei der Unterbau (5) den verschleißanfälligen Oberflächenbereich aufweist.

## Claims

1. Item which is exposed to dynamic loads, with an elastic main body (3, 5; 3, 5, 9, 10) with a surface region which could be subject to wear and which has been formed on at least one vulcanizate of the main body (3, 5 ; 3, 5, 9, 10), the said vulcanizate having been produced from a rubber mixture which comprises EPM rubber and/or which comprises EPDM rubber,
wherein the rubber mixture comprises from 1 phr to 30 phr of polyethylene, **characterized in that** more than 40% by weight of the polyethylene content derives from UHMPE (ultrahigh-molecular-weight polyethylene) or wherein more than 40% by weight of the polyethylene content derives from HDPE (high-density polyethylene).

2. Item according to Claim 1, **characterized in that** the rubber mixture comprises from 5 phr to 20 phr of polyethylene.

3. Item according to Claim 2, **characterized in that** the rubber mixture comprises from 7 phr to 15 phr of polyethylene.

4. Item according to any of Claims 1 to 3, **characterized in that** the rubber mixture comprises from 2 phr to 15 phr of at least one C₆- to C₂₄-fatty acid and/or derivatives thereof.

5. Item according to Claim 4, **characterized in that** the rubber mixture comprises erucamide.

6. Item according to any of Claims 1 to 5, **characterized in that** this is a conveyor belt, a window gasket, a windscreen wiper or a drive belt.

7. Item according to any of Claims 1 to 6, **characterized in that** it is a V-ribbed belt with an elastomeric main body composed of an outer ply (3) and of an underside (5), there being tension-member systems (4) embedded between the outer ply (3) and the underside (5), wherein the underside (5) comprises the surface region which could be subject to wear.

8. Item according to any of Claims 1 to 6, **characterized in that** it is a V-ribbed belt with an elastomeric main body composed of an outer ply (3), an underside (5) and at least one rubber layer (9, 10) located between the outer ply (3) and the underside (5), wherein tension-member systems (4) extend within the rubber layer (9, 10), wherein the underside (5) comprises the surface region which could be subject to wear.

## Revendications

1. Objet, qui est soumis à des sollicitations dynamiques, présentant un corps de base élastique (3, 5 ; 3, 5, 9, 10) pourvu d'une zone de surface sensible à l'usure, qui est formée sur au moins un produit de vulcanisation du corps de base (3, 5 ; 3, 5, 9, 10), qui est préparé à base d'un mélange de caoutchouc contenant du caoutchouc EPM et/ou EPDM, le mélange de caoutchouc contenant 1 pcc (parties pour cent de caoutchouc) à 30 pcc de polyéthylène, **caractérisé en ce que** la proportion de polyéthylène provient, à raison de plus de 40% en poids, d'UHMPE (polyéthylène à poids moléculaire ultraélevé) ou la proportion de polyéthylène provient, à raison de plus de 40% en poids, d'HDPE (polyéthylène haute densité).

2. Objet selon la revendication 1, **caractérisé en ce que** le mélange de caoutchouc contient 5 pcc à 20 pcc de polyéthylène.

3. Objet selon la revendication 2, **caractérisé en ce que** le mélange de caoutchouc contient 7 pcc à 15 pcc de polyéthylène.

4. Objet selon l'une quelconque des revendications 1 à 3, **caractérisé en ce que** le mélange de caoutchouc contient 2 pcc à 15 pcc d'au moins un acide gras en C₆-C₂₄ et/ou de ses dérivés.

5. Objet selon la revendication 4, **caractérisé en ce que** le mélange de caoutchouc contient un amide de l'acide érucasique.

6. Objet selon l'une quelconque des revendications 1 à 5, **caractérisé en ce qu'**il s'agit d'une bande transporteuse, d'un joint pour fenêtre, d'un essuie-glace ou d'une courroie d'entraînement.

7. Objet selon l'une quelconque des revendications 1 à 6, **caractérisé en ce qu'**il s'agit d'une courroie trapézoïdale à nervures présentant un corps de base élastomère, constitué par une couche de recouvrement (3) et un support (5), un support de traction (4) étant incorporé entre la couche de recouvrement (3) et le support (5), le support (5) présentant la zone de surface sensible à l'usure.

8. Objet selon l'une quelconque des revendications 1 à 6, **caractérisé en ce qu'**il s'agit d'une courroie trapézoïdale à nervures présentant un corps de base élastomère, constitué par une couche de recouvrement (3) et un support (5) et au moins une couche de caoutchouc (9, 10) se trouvant entre la couche de recouvrement (3) et le support (5), des supports de traction (4) s'étendant dans la couche de caoutchouc (9, 10), le support (5) présentant la zone de surface sensible à l'usure.
